Europäisches Patentamt

European Patent Office

Office européen des brevets

(11) Publication number: **0 078 172**
**B1**

(12) **EUROPEAN PATENT SPECIFICATION**

(45) Date of publication of patent specification: **21.05.86**

(21) Application number: **82305653.6**

(22) Date of filing: **25.10.82**

(51) Int. Cl.⁴: **C 08 L 33/04, C 08 L 67/00,**
**C 09 D 3/72, C 09 D 3/66,**
**C 09 D 3/81**

(54) **Two-package urethane maintenance primer.**

(30) Priority: **26.10.81 US 314972**

(43) Date of publication of application:
**04.05.83 Bulletin 83/18**

(45) Publication of the grant of the patent:
**21.05.86 Bulletin 86/21**

(84) Designated Contracting States:
**BE DE GB NL SE**

(56) References cited:
**US-A-3 875 091**
**US-A-4 156 678**
**US-A-4 281 078**

The file contains technical information
submitted after the application was filed and
not included in this specification

(73) Proprietor: **E.I. DU PONT DE NEMOURS AND**
**COMPANY**
**1007 Market Street**
**Wilmington Delaware 19898 (US)**

(72) Inventor: **Krueger, Achim Ruediger**
**403 Garwood Drive**
**Cherry Hill New Jersey 08034 (US)**

(74) Representative: **Jones, Alan John et al**
**CARPMAELS & RANSFORD 43 Bloomsbury**
**Square**
**London, WC1A 2RA (GB)**

Courier Press, Leamington Spa, England.

EP 0 078 172 B1

# 0 078 172

**Description**

Background of the invention
1. Field of the invention

This invention relates to primer paints which may be laid down directly, for example, on cleaned steel surfaces of large, exposed and previously painted tanks to prepare them for reception of a new outer protective or decorative paint or enamel coat, reducing the need for cleaning.

2. Prior art

Swanson US—A—3,136,653 illustrates a prior art primer coating.

Krueger US—A—4,156,678 shows hydroxylated (meth)acrylic interpolymers and polyisocyanates useful in the invention. Krueger's ultimate products, furthermore, make excellent topcoats for the instant primers.

Simon US—A—4,232,090 illustrates another known primer.

Strolle, et al, US—A—4,281,078 (Strolle) shows hydroxylated acrylic copolymers and polyester polyols with methods for their preparation, and organic polyisocyanates.

Description of the invention

A major industrial problem is the corrosion of metallic structures, particularly those made from ferrous metals such as steel. Structural steel, for example, and other metallic objects exposed to the weather require painting, a process which must be repeated every few years. In usual practice, the metallic surface is covered first with a primer coating and then with an outer protective and/or decorative coating of paint or enamel.

When repainting is necessary, the original coatings and any rust must be stripped off. Usually, stripping is accomplished by sandblasting, a process which is becoming more and more undesirable. In some areas, for example, it may eventually be prohibited by law. When its use is permitted, the sand particles may clog up motors, even when the latter are protected by tarpaulins or plastic sheets. Some structures may be inaccessible to equipment needed for sandblasting. Environmentalists may object to the sand and other debris from the treatment, and the sand, in fact, may cause silicosis. Finally, sandblasting is very expensive, costing some 50—100% more than the less effective hand cleaning.

Various attempts have been made to reduce the need for sandblasting but none have been commercially successful. Simple hand cleaning, while cheaper than sandblasting, has not proven satisfactory. The present invention, therefore, has as its principal object provision of a vehicle or system and process for preparing a metallic, especially ferrous, surface for a protective coating which reduces the need for sandblasting. Of course, the primer system developed can be used on previously unpainted or sandblasted surfaces.

The above and other objects are achieved by a process in which a previously painted metal surface is hand cleaned (if necessary) as by scraping, wire brushing, power tool abrading or the like, etc., and a two-package primer of good adhesion is applied. The first package of the primer, Package 1, consists of an organic solvent carrying a dispersion of a hydroxyl-bearing methacrylate or acrylate polymer or, alternatively, a hydroxyl-terminated polymeric polyester or polyester polyol, pigment and adjuvants (in this specification, the (meth)acrylate polymers and the polyesters will be spoken of as "prepolymer", and the "pigment" will include extender desirable in primers). Package 2 consists of a conventional polyisocyanate crosslinking agent. The dispersion and the polyisocyanate are mixed at the time of use, and the mixture is applied to the surface to be protected by any convenient means, e.g., by brush, roll or spray, etc. The primer dries in air very rapidly, minimizing the time when tacky material is vulnerable to soil and allowing rapid recoat. This primer can be used directly as a topcoat but, if only because of appearance, is generally a primer for a topcoating of polyurethane, epoxide or the like.

Details of the invention

The hydroxylated prepolymers of Package 1 of this invention are either (1) hydroxyl-containing acrylic (i.e., acrylate or methacrylate) polymers or (2) hydroxyl-containing polymeric polyesters. Any polymer used should contain about 1—10% by weight of free hydroxyl groups, with 1.5—6% preferred, and be soluble in organic solvents to the extent of at least 30% by weight.

The acrylic prepolymers usable are formed from two or more conventional ethylenically unsaturated polymerizable monomers, one of which is always at least one hydroxyalkyl acrylate or methacrylate in which the alkyl group contains 2—18 carbons. Such monomers include hydroxyethyl methacrylate, hydroxypropyl methacrylate, hydroxybutyl methacrylate, hydroxyoctyl methacrylate and corresponding acrylates and the like, Preferred are hydroxyalkyl methacrylates or acrylates in which the alkyl groups contain 2—4 carbons, e.g., 2-hydroxyethyl acrylate and the like.

Typical ethylenically unsaturated monomers that can be used with the hydroxylated monomer are, for example: vinyl and vinylidene chlorides; olefins such as ethylene, propylene and the like; vinyl acetate; conjugated dienes having 4 to 10 carbon atoms, such as butadiene; aromatic hydrocarbons having vinylene groups, such as styrene and alkyl-substituted styrene, such as α-methyl styrene; alkyl maleates, such as dibutyl maleate; vinyl pyrrolidone; methacrylonitrile and acrylonitrile; esters of methacrylic acid

2

and acrylic acid, preferably alkyl esters having 1—12 carbon atoms in the alkyl group, such as methyl methacrylate, ethyl methacrylate, propyl methacrylate, butyl methacrylate, hexyl methacrylate, 2-ethylhexyl methacrylate, lauryl methacrylate and the like, and corresponding acrylates; or mixtures of these monomers. Particularly useful monomers include styrene, methyl methacrylate, butyl methacrylate, ethyl acrylate, acrylonitrile, and vinyl pyrrolidone.

For the purposes of this invention, the preferred acrylic prepolymer contains at least three monomers, i.e., the hydroxylated acrylic monomer, at least one other acrylic monomer, and styrene. Preferred monomers are 2-hydroxyethyl acrylate, a lower alkyl methacrylate and a longer-chain alkyl methacrylate, e.g., ethyl and lauryl methacrylates, and styrene, with the hydroxylated monomer comprising at least 6.6% by weight and styrene, 20—70%.

The acrylate or methacrylate prepolymer is made by conventional methods: see, for example, the Strolle patent noted. The precursor monomers and catalyst (azo, peroxide) are mixed together in an organic solvent such as Cellosolve® acetate or ethyl acetate and refluxed until polymerization is complete. Both monomers and prepolymers are very soluble in organic solvents and the product need not be separated from solvent used in its preparation. The result is a high-solids solution, ca. 55—80% by weight, with 70% preferred. High concentration of prepolymer is useful in applications to reduce pollution caused by solvent. The molecular weight $\overline{M}_n$ (number average molecular weight) is about 500—10,000 with about 4,000 preferred, in the case of a methacrylate or acrylate, or 340—10,000 in the case of a polymeric polyester.

Any organic solvent used either for the preparation of the prepolymer or for forming a dispersion therewith should, of course, be anhydrous and free from hydroxyl. Otherwise, general organic solvents may be used. Cellosolve® acetate and ethyl acetate are preferred. Aromatics such as xylene are usable but are less preferred because of pollution problems.

To a prepolymer solution prepared as above or diluted is added the pigment mixture necessary for the primer. The pigment mixture contains (1) at least 20% by weight of a pigment in the form of platelets, (2) carbon (or lamp) black in an amount of no more than 5% by weight and (3) barium lanolate in an amount of no more than 6% by weight, the pigment/binder weight ratio of said solids being in the range 60/100 to 600/100. This pigment is devoid of heavy toxic metals, notably lead and chromium, and preferably contains inorganic coloring matter such as red iron oxide and zinc oxide. As the present composition is a primer at least one relatively inert inorganic pigment shaped in the form of platelets is included. Several chemicals are commercially available in platelet form, e.g., silicates (magnesium and sodium silicates, hydrous aluminum silicate, glass, mica, quartz); metals (aluminum, stainless steel, nickel); oxides (iron and zinc oxides, alumina); salts (organic salts of calcium, barium); etc. A preferred extender is talc (magnesium silicate) but commercially available micaceous iron oxide (metallic black-brown platelets) is equally effective, although expensive. Heterogeneous roughly hewn nodular extender particles such as calcium carbonate or barium sulfate can be used, but they are not as effective as the shaped lamellar materials. Between 20 and 95% of the pigment is generally filler.

The total composition of the pigment is given by the following Table I:

·TABLE I

| Pigment | Percentage by weight | | | Preferred (%) |
|---|---|---|---|---|
| Calcium carbonate | — | — | 20—90 | — |
| Talc | 20—90 | — | 0—90 | 70 |
| Micaceous iron oxide | — | 20—95 | — | — |
| Zinc oxide | 5—25 | 5—25 | 5—25 | 14 |
| Red iron oxide | 0—50 | 0—50 | 0—50 | 14 |
| Carbon black | ≤5 | ≤5 | ≤5 | 2 |
| | 100 | 100 | 100 | 100 |

In addition to the pigment components mentioned, a corrosion inhibitor is included as an adjuvant in Package 1. This is barium lanolate, which acts also as a pigment dispersant and anti-settling agent. Barium lanolate is used to the extent of no more than 6.0% by weight of the total pigment weight (≤4.2% total weight of solids).

The ingredients which make up Package 1 of the invention are readily assembled. A solution of prepolymer prepared as noted is adjusted to the proper solids content, i.e., ca. 37%, by means of solvents such as Cellosolve® acetate and the various solid materials added thereto. The mixture is then ground for about 1 day in a ball mill until a substantially homogeneous nonsettling or stable suspension is obtained.

Table II gives some characteristics of the pigmented Package 1 materials:

TABLE II

|  | Limits | Preferred |
| --- | --- | --- |
| P/B (Pigment to binder ratio)* | 60/100—600/100 | 213/100 |
| PVC (Pigment volume concentration) | 15—65% | 42% |
| % Vol. solids | 45—82% | 50% |
| % Wt. solids | 55—92% | 67% |

*Here B (the binder) includes only the prepolymer.

Package 2 is a solution in an organic solvent of a polyisocyanate, substantially a polyisocyanate as disclosed in above-mentioned patent US—A—4,156,678, especially at col. 2, line 37, through col. 3, line 18. Some of these compounds are known as Desmodurs® and Mondurs®, readily available commercially and quite useful here.

The polyisocyanate of Package 2 is used with the hydroxylated prepolymer of Package 1 in the mole ratio —NCO/—OH 0.1/1.0—2.2/1.0, with 1/1—1.15/1 being preferred. It is dissolved in an organic solvent as is the prepolymer but, since some aromatics can be tolerated, a Cellosolve® acetate/ethyl acetate/xylene mixture is generally employed (69/23/8% by weight). Data on the mixed Packages are given in Table III:

TABLE III

|  | Limits | Preferred |
| --- | --- | --- |
| P/B* | 50/100—400/100 | 143/100 |
| PVC | 15%—60% | 33% |
| % Vol. solids | 45%—80% | 50% |
| % Wt. solids | 50%—90% | 67% |

*Here the binder includes polyisocyanate as well as prepolymer.

When it is desired to use the present coating composition, it is merely necessary to mix the two packages and apply the mixture to the prepared surface. Although the mixture dries rapidly in air, it will remain sufficiently fluid for application, i.e., with a viscosity below about 1 PaS (1000 cps), for up to about 8 hours. In general, any substrate, particularly a metallic substrate, can be protected by the present primer. Ferrous surfaces, e.g., of iron or steel, can readily be coated. A rusty surface, for example, need only be hand cleaned although performance is improved with improved cleaning. The primer can also be put down directly on a previously painted surface. In any event, structural steel girders, steel oil storage tanks, pipes, steel sheeting for ships, trucks, etc., are easily protected by the primers.

Application can be by any of the conventional means such as spraying where permitted, rollers or brush. The primer dries rapidly in air, e.g., in about 5—8 hours, at 20—25°C, and is then ready for application of the other protective coat. The superimposed coat can be of usual commercial varieties, e.g., acrylic urethane such as Imron® or epoxide such as Corlar®.

It is sometimes desirable to accelerate the reaction between isocyanate and hydroxyl, particularly in cold weather or when a quick-drying shop primer is needed. Conventional tertiary amines such as N,N-dimethyl dodecylamine; N,N,N',N' - tetramethyl - 1,3 - butane diamine; N,N,N',N' - tetra-methylethylene diamine; triethylamine; N-ethyl morpholine; etc., or organo-metallic compounds such as stannous octoate, etc., can be used. For the purposes of this invention a mixture of dibutyltin dilaurate (DBTDL) and 1,4 - diaza(2,2,2)bicyclooctane (DABCO; triethylenediamine) has been satisfactory (see Example 4 below). The mixed catalyst is preferably added separately to the polyisocyanate and polyester polyol components as substantially in a third package.

In the alternative embodiment of the invention, the hydroxyacrylic prepolymer of Package 1 is replaced by a polyester polyol with pendant hydroxyl groups. The polyesters employed are made conventionally from dicarboxylic acids (or anhydrides, where they exist) such as the phthalic acids and the like and an excess of monomeric glycol. Branching as produced by a branching polyol such as trimethylolpropane or pentaerythritol is preferred but not necessary. The degree of branching is determined by the mole ratio of the ingredients as shown in Example 3. Small amounts of monocarboxylic acids, e.g., benzoic acid, may be used if desired (to defunctionalize some hydroxyl groups). The resulting polyester should have about 1—10% by weight of free hydroxyl. The cited Strolle patent, for example, shows usable polyester polyols, with precursors and preparation. The polyester polyol is packaged and applied like the hydroxylacrylic

4

prepolymer above and with similar results. It is found in practice that the polyester aspect of the invention can give a somewhat higher concentration of solids than the acrylate.

Examples

There follow some examples illustrating the practice of the invention. Unless otherwise noted, in these examples all parts, proportions and percentages are in terms of weight and temperatures, in degrees centigrade.

Example 1

A. Hydroxylated resin.

A hydroxyacrylate polymer was prepared at reflux (ca. 145—155°) in Cellosolve® acetate from premixed styrene (31.5%), ethyl methacrylate (31.5%), lauryl methacrylate (25.0%) and 2-hydroxyethyl acrylate (12.0%) with t-butyl peracetate as catalyst. The product was a 70% solids solution of the hydroxyacrylate polymer of the composition determined by the monomers: $\overline{M}_n$=4000; Vis=2.5 Pas (2500 cps); —OH=1.76%.

B. Dispersion

Resin of A (27.91%) is diluted with Cellosolve® acetate (18.60%) and ethyl acetate (6.04%), and pigment (45.59%) and corrosion inhibitor (1.86%) were added thereto. Pigment consist of the extender talc (69.38%), zinc oxide (14.28%), iron oxide (14.28%) and carbon (2.06%; furnace black). The corrosion inhibitor is barium lanolate. All of these materials are mixed and milled together for about 18 hours to a fineness of 0.5 mils. This process forms a stable brown dispersion: Solids=67.0%.

C. Crosslinking agent

A mixture of polypropylene glycol (49%), trimethylolpropane (8%) and toluene diisocyanate (43%) were reacted together during reflux in a nonaqueous solvent mixture of xylene/Cellosolve® acetate (70/30) under a nitrogen blanket. An isocyanate-terminated prepolymer of about 75% gravimetric solids was obtained with an average —NCO content of about 9.4% based on solids.

This prepolymer was further diluted with ethyl acetate to yield a final composition of 58.14% solids in a solvent blend of Cellolsolve® acetate (17%), xylene (40%), and ethyl acetate (43%).

D. The dispersion of B and the crosslinking agent of C were mixed together in a volume ratio of four to one (4:1), respectively. This two-component mixture is stable for use as a paint (or has a "usable potlife") in excess of twenty-four (24) hours during which time it must be used. Upon further aging, reaction of the two polymers introduced through their respective package components leads to increasing polymeric molecular weights accompanied by an increase in viscosity ultimately producing an insoluble gel.

The two-component primer mixed as described was sprayed onto 10.16 cm×30.48 cm (4"×12") hot rolled steel (AISI-1010, 16 gauge) panels to a dry film thickness of 50.8 μm to 76.2 μm (2 to 3 mils). Simultaneously, panels of the same substrate were prepared by applying commercial red lead oil-alkyd metal primers as well as two-package epoxy/polyamide metal primers to the same dry film thickness. The panels were air dried at ambient temperatures for seven days and were then coated with a urethane enamel to 50.8 μm (2 mils) dry film thickness. These painting systems were subjected to accelerated corrosion testing in a salt fog chamber controlled at 35±1.12°C (95±2°F) using an aqueous 5% sodium chloride solution. This test is well established in the industry and is based on ASTM B-117 method.

After 816 hours' exposure in the salt fog chamber, the painting system using the commercial control red lead oil-alkyd primer had developed severe blistering and rusting on the face of the panel. The commercial control epoxy/polyamide primer system showed face-blistering at 1000 hours of exposure, while the two-component urethane primer system showed no face-blistering after 2300 hours of exposure.

Example 2

A. A hydroxyacrylate polymer was made up as in Example 1 except that the styrene/ethyl methacrylate/lauryl methacrylate/2-hydroxylethyl acrylate weight ratio was 25/25/20/30: —OH=4.4%; $\overline{M}_n$=4000.

B. A brown dispersion was prepared as in Example 1 except that the resin of Example 2 A was substituted.

C. Desmodur® N-75, a 75% solids solution of an aliphatic polyisocyanate prepolymer commercialized by Mobay Chemical Corp., was diluted to 53.6% solids with ethyl acetate for use in conjunction with the primer prepared in Example 2 B.

D. Four volumes of the dispersion of Example 2 B were mixed with one volume of crosslinker of Example 2 C. This primer, together with commercial control metal primers such as epoxy/polyamide as well as several red lead and oil primers, were applied to 10.16 cm×30.48 cm (4"×12") panels of hot rolled steel (AISI-1010; 16 gauge). These panels had been previously exposed to the elements for nine months for rusting and subsequently cleaned with a wire brush to simulate actual field conditions in the industry. These primed panels were allowed to dry for a week and then coated with a urethane enamel. These systems were evaluated by salt spray testing as in Example 1 D. The system based on the urethane primer of this invention showed no face-blistering after 2100 hours of exposure. All the other systems started blistering at a 768-hour check and showed failure due to blistering at the 1250 hour check.

Example 3

A. A polyester was prepared by reacting under reflux in ca. 3% xylene, pentaerythritol, benzoic acid, neopentyl glycol, isophthalic acid, phthalic anhydride and adipic acid in the mole ratio 3.2/6.4/12.8/4.0/2.0. Heating was continued with removal of water until the pot temperature reached 215°. The batch was cooled to 80° and thinned with ethyl acetate: Solids=85%; —OH=6.32%; Acid No.=20—30.

B. A stable dispersion was prepared by grinding in steel ball media to a fineness of 12.7 μm (0.5 mils): polyester resin as prepared in Example 3 A (32.67%); Cellosolve® acetate (16.83%); talc (33.66%); zinc oxide (Kadox Trade Mark 515) (6.93%); red iron oxide (6.93%); furnace black pigment (Raven 500) (1.00%); and barium lanolate (1.98%).

C. A crosslinker was prepared by diluting Desmodur E-21, a 100% solids polyisocyanate prepolymer available from Mobay Chemical Corp. to 75% solids with xylene.

D. The dispersion of Example 3 B was blended with the crosslinker of Example 3 C in the weight ratio 2:1. This primer was sprayed together with control commercial red lead and oil/alkyd metal primers over pre-rusted hand/wire brush-cleaned 10.16 cm×30.48 cm (4″×12″) steel panels as described in Example 2 above. After drying, these panels were coated with the same urethane enamel and placed in Florida at 5° angle from horizontal facing south. After six months of exposure, the commercial red lead and oil/alkyd primed system had developed considerable blistering. The urethane primed system of this invention was in immaculate condition.

Example 4

A series of tests were made on the mixed primer of Example 1 D to determine the effect of catalysts on drying time. The catalyst used was dibutyltin dilaurate (DBTDL) alone and in conjunction with triethylenediamine (DABCO). The paint samples were equilibrated to 25° and paint-cure was measured at 25°.

The mixed primer was further mixed with various catalyst concentrations. Films were cast from these samples on 12.7 cm×17.78 cm (5″×7″) glass plates with a 254 μm (10 mil) clearance Bird film applicator in accordance with ASTM-D-823-53 except that the applicator blade was hand drawn. When the primer films were tack free, they were overcoated with a commercial polyurethane enamel and a commercial epoxy/polyamide enamel, respectively, both containing high levels of strong and potent solvents. The primer films were not attacked by these strong solvents, and the enamels dried out flawlessly and at high-gloss levels.

The effect of catalyst on the film cure is reflected in the tack-free time and the pot life summarized in Table IV:

TABLE IV

| Catalyst[*] (%DBTDL/%DABCO) | Pot life | | Tack free |
|---|---|---|---|
| None | 48 hrs | | 4.5 hrs |
| 0.05/0.00 | 8 hrs | 16 hrs | 3.25 hrs |
| 0.05/0.06 | 6 hrs | | 2.45 hrs |
| 0.10/0.00 | 6 hrs | | 2.45 hrs |
| 0.10/0.06 | 3.5 hrs | | 2 hrs |
| 0.10/0.12 | 1.5 hrs | | 1.5 hrs |

[*]% Catalyst based on resin solids.

The catalyst level of 0.05% DBTDL/0.06% DABCO based on resin solids of mixed primer of Example 1 was used to spray a few structural steel I-beams and crossmembers in a chemical installation at 6°C. By night fall the temperature had dropped to −4°C. Next morning the primer was tack free and cured hard. It was then overcoated with commercial urethane enamel with excellent results and appearance. The pot life at these temperatures exceeded an eight-hour work shift.

From these results it is considered that, between 50—100°F (10—37.78°C), no catalyst is needed; between 30—50°F (−1.11—37.78°C), the 0.05/0.06 ratio is desirable; and between 10—30°F (−12.22—1.11°C), the 0.10/0.12 ratio is desirable.

6

# 0 078 172

## Claims

1. A stable dispersion in an anhydrous non-hydroxylated organic solvent containing at least 55% by weight of solids of:

a binder formed from at least one hydroxylated methacrylate or acrylate polymer or polymeric polyester having 1—10% by weight of pendant hydroxyl groups and a number average molecular weight of about 500—10,000 in the case of a methacrylate or acrylate, or 340—10,000 in the case of a polymeric polyester, and soluble to the extent of at least 30% by weight in the solvent; and

a pigment mixture containing (1) at least 20% by weight of a pigment in the form of platelets, (2) carbon black in an amount of no more than 5% by weight, and (3) barium lanolate in an amount of no more than 6% by weight,

the pigment/binder weight ratio of said solids being in the range 60/100 to 600/100.

2. A dispersion of Claim 1 wherein the binder is a polymer of a hydroxyalkyl methacrylate or acrylate or a polyester of at least one dicarboxylic acid or corresponding anhydride and an excess of at least one polyol.

3. A dispersion of Claim 1 or Claim 2 wherein the platelets are platelets of talc or micaceous iron oxide.

4. The process which comprises

A. mixing together a dispersion of any one of Claims 1 to 3 and a polyisocyanate in an —NCO/—OH mole ratio of about 0.1/1.0 to 2.2/1.0;

B. applying the mixture from A.to a substrate; and

C. permitting the mixture from B to air-dry on the substrate.

5. A coating vehicle capable of curing in air at room temperature consisting essentially of solvent and

A. an organic polyisocyanate and

B. a dispersion of any one of Claims 1 to 3,

the mole ratio of organic isocyanate —NCO to —OH being in the range 0.1/1.0 to 2.2/1.0.

6. An article comprising a substrate carrying adhered thereto the coating vehicle of Claim 5 in cured form.

7. An article of Claim 6 comprising a ferrous substrate carrying superimposed upon the cured coating a layer of a second coating.

## Patentansprüche

1. Eine stabile Dispersion in einem wasserfreien nicht-hydroxylierten organischen Lösungsmittel, enthaltend mindestens 55 Gew.% Feststoffe aus:

einem Bindemittel, hergestellt aus mindestens einem hydroxylierten Methacrylat- oder Acrylatpolymeren oder polymerem Polyester mit 1 bis 10 Gew.% Hydroxylseitengruppen und einem Zahlenmittelmolekulargewicht von etwa 500 bis 10 000 im Falle eines Methacrylats oder Acrylats, oder 340 bis 10 000 im Falle eines polymeren Polyesters, und löslich zu mindestens 30 Gew.% im Lösungsmittel; und

einem Pigmentgemisch, enthaltend (1) mindestens 20 Gew.% eines Pigmentes in Form von Plättchen, (2) Russ in einer Menge von nicht mehr als 5 Gew.%, und (3) Bariumlanolat in einer Menge von nicht mehr als 6 Gew.%,

wobei das Pigment/Bindemittel-Gewichtsverhältnis der Feststoffe im Bereich von 60/100 bis 600/100 liegt.

2. Eine Dispersion von Anspruch 1, in der das Bindemittel ein Polymeres eines Hydroxyalkylmethacrylats oder -acrylats oder ein Polyester aus mindestens einer Dicarbonsäure oder dem entsprechenden Anhydrid und einem Überschuss mindestens eines Polyols ist.

3. Eine Dispersion von Anspruch 1 oder 2, in der die Plättchen Plättchen von Talkum oder Eisenglimmeroxid sind.

4. Das Verfahren, das umfasst

A. Vermischen einer Dispersion nach irgendeinem der Ansprüche 1 bis 3 und einem Polyisocyanat in einem —NCO/—OH-Molverhältnis von etwa 0,1/1,0 bis 2,2/1,0;

B. Aufbringung des Gemisches von A auf ein Substrat; und

C. Trocknenlassen des Gemisches von B auf dem Substrat an der Luft.

5. Ein Überzugsvehikel, das an Luft bei Raumtemperatur härtbar ist, bestehend im wesentlichen aus Lösungsmittel und

A. einem organischen Polyisocyanat und

B. einer Dispersion nach irgendeinem der Ansprüche 1 bis 3, wobei das Molverhältnis von organischem Isocyanat —NCO zu —OH im Bereich von 0,1/1,0 bis 2,2/1,0 liegt.

6. Ein Gegenstand umfassend ein Substrat, auf dem das Überzugsvehikel von Anspruch 5 in gehärteter Form haftet.

7. Ein Gegenstand nach Anspruch 6 mit einem eisenhaltigen Substrat, der auf der gehärteten Schicht eine Schicht eines zweiten Auftrages enthält.

7

**Revendications**

1. Une dispersion stable dans un solvant organique non hydroxylé anhydre, contenant au moins 55% en poids de matières solides constituées:

d'un liant formé à partir d'au moins un polymère de méthacrylate ou d'acrylate hydroxylé ou d'un polyester polymère comprenant 1 à 10% en poids de groupes hydroxyle pendants et un poids moléculaire moyen en nombre d'environ 500 à 10 000 dans le cas d'un méthacrylate ou d'un acrylate, ou de 340 à 10 000 dans le cas d'un polyester polymère, et soluble à raison d'au moins 30% en poids dans le solvant; et

d'un mélange de pigments contenant (1) au moins 20% en poids d'un pigment sous forme de paillettes, (2) du noir de carbone en une proportion ne dépassant pas 5% en poids, et (3) du lanolate de baryum en une proportion ne dépassant pas 6% en poids,

le rapport pondéral pigment/liant desdits solides se situant dans l'intervalle de 60/100 à 600/100.

2. Une dispersion selon la revendication 1 dans laquelle le liant est un polymère de méthacrylate ou d'acrylate d'hydroxyalkyle ou un polyester d'au moins un acide dicarboxylique ou de l'anhydride correspondant et d'un excès d'au moins un polyol.

3. Une dispersion selon la revendication 1 ou la revendication 2 dans laquelle les paillettes sont des paillettes de talc ou d'oxyde de fer micacé.

4. Le procédé comprenant les opérations suivantes:

A. à mélanger ensemble une dispersion selon l'une quelconque des revendications 1 à 3 et un polyisocyanate dans un rapport molaire —NCO/—OH d'environ 0,1/1,0 à 2,2/1,0;

B. à appliquer le mélange de A à un substrat; et

C. à permettre au mélange provenant de B de sécher à l'air sur le substrat.

5. Un véhicule de revêtement apte à durcir à l'air à la température ambiante formé essentiellement de solvant et

A. d'un polyisocyanate organique et

B. d'une dispersion selon l'une quelconque des revendications 1 à 3,

le rapport molaire des radicaux —NCO de l'isocyanate organique aux radicaux —OH se situant dans l'intervalle de 0,1/1,0 à 2,2/1,0.

6. Un article comprenant un substrat auquel adhère le véhicule de revêtement selon la revendication 5 sous forme durcie.

7. Un article selon la revendication 6 comprenant un substrat ferreux portant, superposé sur le revêtement durci, une couche d'un deuxième revêtement.